# FASCICULE DE BREVET EUROPEEN

(11) **EP 3 169 506 B1**
(45) Date de publication et mention de la délivrance du brevet: **26.09.2018**
(21) Numéro de dépôt: 15748281.1
(22) Date de dépôt: 08.07.2015
(51) Int. Cl.: B29C 49/18, B29C 49/80, B29C 49/06, B29C 49/12, B29C 49/78

(54) **PROCÉDÉ DE DÉTECTION D'ANOMALIES DANS UNE MACHINE DE FORMAGE DE RÉCIPIENTS**
VERFAHREN ZUR STÖRUNGSERKENNUNG IN EINER BEHÄLTERHERSTELLUNGSMASCHINE
METHOD FOR DETECTING ANOMALIES IN A CONTAINER-FORMING MACHINE

(30) Priorité: 18.07.2014 FR 1456983
(43) Date de publication de la demande: 24.05.2017
(73) Titulaire: Sidel Participations, 76930 Octeville-sur-Mer (FR)
(72) Inventeur: LEMBLE, Thierry, F-76930 Octeville-sur-Mer (FR)
(74) Mandataire: Grassin d'Alphonse, Emmanuel Jean Marie
(86) Numéro de dépôt international: PCT/FR2015/051890
(87) Numéro de publication internationale: WO 2016/009131

(56) Documents cités:
- US-A1- 2009 039 569
- US-A1- 2010 090 375
- US-A1- 2014 110 873

## Description

L'invention a trait au domaine du formage des récipients à partir d'ébauches en matière plastique (notamment PET), le terme « ébauche » désignant une préforme brute d'injection ou un récipient intermédiaire issu d'une ou plusieurs opération (présoufflage, soufflage) conduites à partir d'une telle préforme mais n'ayant pas encore la forme du récipient final.

Le formage d'un récipient est réalisé dans une machine de formage à partir d'une ébauche préalablement chauffée à une température supérieure à la température de transition vitreuse de la matière constituant l'ébauche (laquelle est d'environ 80°C pour le PET). La machine comprend une pluralité de postes de formage, chacun équipé d'un moule et d'une tuyère raccordée à une source de fluide sous pression et par laquelle le fluide est injecté dans une ébauche placée dans le moule.

Ordinairement, le fluide est injecté dans l'ébauche en deux étapes : une première étape dite de présoufflage qui consiste à mettre l'ébauche en communication avec une source de pression dite de présoufflage, relativement faible (inférieure à 10 bars), suivie d'une deuxième étape dite de soufflage proprement dit, qui consiste à mettre l'ébauche en communication avec une source de pression dite de soufflage sensiblement plus élevée (supérieure à 15 bars, et généralement supérieure à 20 bars). Il est ensuite procédé à une dépressurisation du récipient préalable à son évacuation du moule.

Pour limiter la consommation d'énergie, il est connu, notamment du brevet américain US 5 648 026, de procéder, lors de la dépressurisation, à une récupération au moins partielle du fluide sous pression pour alimenter la source de pression de présoufflage.

Par ailleurs, le document US 2014-110873 décrit un procédé de formage de conteneurs à partir de préformes, utilisant un réservoir pour l'injection de soufflage et pour un recyclage d'air de soufflage.

Le document US 2009/0039569 décrit un procédé de formage de récipients à partir d'ébauches en matière plastique au sein d'une machine de formage, un cycle de formage comprenant au moins une étape d'injection d'un fluide sous pression dans l'ébauche, suivie d'une étape de dépressurisation accompagnée d'une opération de récupération partielle du fluide sous pression au cours de la dépressurisation, la machine comprenant une pluralité de postes de formage chacun équipé d'un moule et d'une tuyère raccordée à une source de fluide sous pression et par laquelle le fluide est injecté dans une ébauche placée dans le moule, la machine étant équipée d'un réservoir pour la récupération de fluide sous pression au cours de l'opération de récupération, ce procédé comprenant les opérations consistant à :- mesurer la pression du fluide dans le réservoir ;- comparer cette pression avec une pression théorique prédéterminée pour détecter tout écart, dit critique, supérieur à une valeur seuil prédéterminée ;- dès lors qu'un écart critique est détecté, générer un signal.".

Le formage des récipients met en jeu un grand nombre d'électrovannes et d'actionneurs qui peuvent subir des défaillances. Ces défaillances peuvent être perçues directement sur la machine par une augmentation de la consommation fluidique, ou indirectement sur les récipients, qui présentent des défauts de fabrication. L'identification d'une défaillance liée aux électrovannes et actionneurs suppose donc de la part de l'opérateur une connaissance approfondie des corrélations qui peuvent exister entre un mauvais fonctionnement du système et un défaut sur un récipient prélevé au hasard de la production.

A supposer qu'une telle défaillance soit identifiée, il reste à identifier le poste de formage défaillant, ce qui nécessite l'arrêt de la machine (et donc de la production).

On pourrait, certes, effectuer des mesures systématiques de pression sur chaque poste de formage pour détecter, sur chaque courbe relatant les variations de pression dans chaque cycle de formage associé à chaque poste, d'éventuelles anomalies. Mais une telle procédure requiert une puissance de calcul trop importante.

Un objectif est par conséquent de proposer un procédé permettant, de manière fiable mais sans requérir trop de puissance de calcul, de détecter une anomalie au cours du formage de récipients.

A cet effet, il est proposé un procédé de détection d'une anomalie au cours du formage de récipients à partir d'ébauches en matière plastique au sein d'une machine de formage, un cycle de formage comprenant au moins une étape d'injection d'un fluide sous pression dans l'ébauche, suivie d'une étape de dépressurisation accompagnée d'une opération de récupération partielle du fluide sous pression au cours de la dépressurisation, la machine comprenant une pluralité de postes de formage, chacun équipé d'un moule et d'une tuyère raccordée à une source de fluide sous pression et par laquelle le fluide est injecté dans une ébauche placée dans le moule, la machine étant équipée d'un réservoir raccordé à l'ensemble des tuyères pour la récupération de fluide sous pression au cours de l'opération de récupération, ce procédé comprenant les opérations consistant à :
- mesurer en permanence la pression du fluide dans le réservoir ;
- comparer cette pression avec une pression théorique prédéterminée pour détecter tout écart, dit critique, supérieur à une valeur seuil prédéterminée ;
- dès lors qu'un écart critique est détecté, générer une alerte.

Il a été constaté que la pression régnant dans le réservoir de récupération est affectée, en fonctionnement normal, de variations périodiques qui correspondent aux cycles successifs de récupération et de soufflage de chaque poste de formage. Toute variation dans ces variations périodiques peut donc être considérée comme témoignant d'une anomalie affectant l'un des postes. Cette procédure permet donc, par l'analyse d'une unique courbe, de détecter une anomalie sans qu'il soit nécessaire de mesurer en permanence la pression régnant dans chaque tuyère. Cette procédure est robuste et ne nécessite qu'une faible puissance de calcul.

Les opérations supplémentaires suivantes peuvent être prévues :
- une opération de construction d'un signal caractéristique des variations de la pression du fluide dans le réservoir ;
- une opération d'échantillonnage du signal pour y déceler des séquences similaires se répétant à intervalles sensiblement constants ;
- une opération d'affectation de chaque séquence à un poste de formage ;
- lorsqu'un écart critique est détecté dans une séquence, une opération de détermination du poste de formage correspondant à celle-ci.

L'alerte comprend par exemple la désignation du poste de formage correspondant à la séquence dans laquelle l'écart critique a été détecté.

Lorsque chaque poste est équipé d'un capteur de pression propre à mesurer la pression de fluide dans la tuyère, il peut être prévu une phase de mesure des variations de la pression, au cours d'un cycle de formage, du fluide dans la tuyère du poste de formage désigné par l'alerte.

Dans ce cas, les opérations supplémentaires peuvent être prévues :
- une opération de construction d'un signal caractéristique des variations de la pression du fluide dans la tuyère du poste de formage désigné par l'alerte ;
- une opération de comparaison du signal caractéristique des variations de la pression du fluide dans la tuyère du poste de formage désigné par l'alerte avec un signal prédéterminé pour détecter tout écart supérieur à une valeur seuil prédéterminée.

D'autres objets et avantages de l'invention apparaîtront à la lumière de la description d'un mode de réalisation, faite ci-après en référence aux dessins annexés dans lesquels :
- la figure 1 est une vue schématique illustrant une installation de fabrication de récipients, comprenant une machine de formage par soufflage ou étirage soufflage ;
- la figure 2 est une vue schématique en coupe illustrant la machine de formage équipée de circuits de présoufflage, soufflage et récupération ;
- la figure 3 est un diagramme sur lequel sont tracées des courbes relatant les variations de la pression dans les circuits de présoufflage, soufflage et récupération ;
- la figure 4 est un diagramme sur lequel est tracée une courbe relatant les variations de la pression dans un récipient en cours de formage ; le trait plein illustre l'évolution nominale de la pression ; le trait mixte illustre une anomalie.

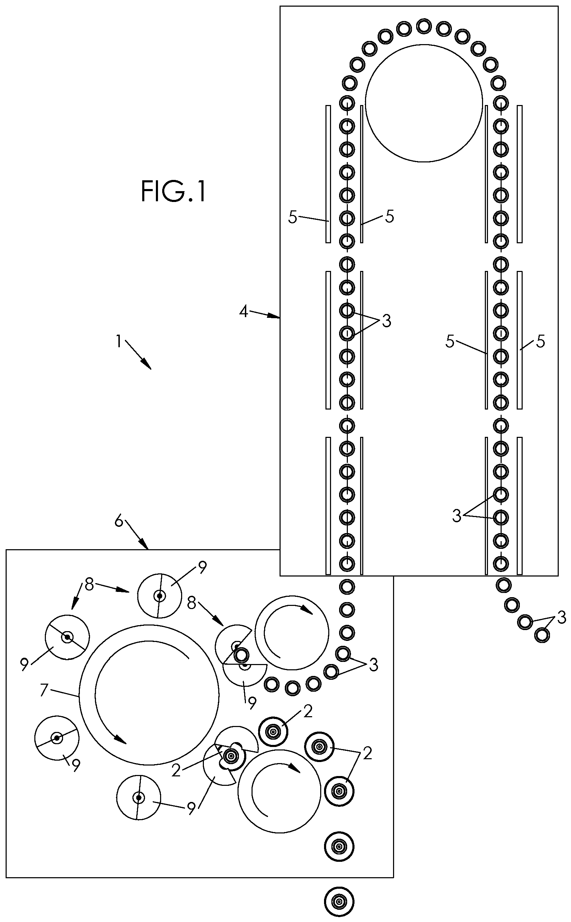

Sur la figure 1 est représentée une installation **1** de fabrication de récipients **2** à partir d'ébauches **3** en matière plastique (notamment PET). Les ébauches **3** peuvent être des préformes brutes d'injection, ou des corps creux intermédiaires entre une préforme et un récipient final et ayant subi, à partir de l'état de préforme, une ou plusieurs opérations de transformation (présoufflage, soufflage) n'ayant toutefois pas abouti à l'état de récipient final.

L'installation **1** comprend, en premier lieu, une machine **4** de conditionnement thermique, équipée de parois **5** rayonnantes devant lesquelles les ébauches **3** défilent pour être chauffées à une température supérieure à la température de transition vitreuse de la matière qui les constituent (laquelle est de 80°C environ dans le cas du PET).

L'installation **1** comprend, en second lieu, une machine **6** de formage par soufflage ou étirage soufflage des récipients **2** à partir des préformes **3** chaudes issues de la machine **4** de conditionnement thermique.

La machine **6** de formage comprend une roue **7** tournante et une pluralité de postes **8** de formage montés sur la roue **7**, à la périphérie de celle-ci. Chaque poste **8** de formage est équipé d'un moule **9** à l'empreinte d'un récipient **2** final. Dans l'exemple illustré, chaque moule **9** est du type portefeuille et comprend deux demi-moules **10**, **11** montés articulés autour d'une charnière commune, ainsi qu'un fond **12** de moule qui, avec les demi-moules **10**, **11**, complète l'empreinte du récipient **2** à former.

La machine **1** comprend également une source **13** primaire de fluide (de préférence un gaz inerte, par exemple de l'air) sous une pression PS dite de soufflage, de préférence supérieure ou égale à 20 bars environ.

La source **13** primaire comprend un réservoir **14** de soufflage, et chaque poste **8** de formage est équipé d'une tuyère **15** surmontant le moule **9** et raccordée au réservoir **14** de soufflage par un circuit **16** de soufflage comprenant une tuyauterie et une électrovanne **17** de soufflage commandée par un actionneur **18.** La pression PS de soufflage régnant dans le réservoir **14** de soufflage est régulée, c'est-à-dire qu'elle est maintenue à une valeur sensiblement constante. Selon un exemple de réalisation, la pression PS de soufflage est de 25 bars environ.

La machine **6** comprend aussi une source **19** secondaire de fluide (de préférence un gaz inerte, par exemple de l'air) sous une pression PP dite de présoufflage, inférieure à la pression PS de soufflage et de préférence inférieure ou égale à 10 bars environ.

La source **19** secondaire comprend un réservoir **20** de présoufflage, et la tuyère **15** de chaque poste **8** de formage est raccordée au réservoir **20** de présoufflage par un circuit **21** de présoufflage comprenant une tuyauterie et une électrovanne **22** de présoufflage commandée par un actionneur **23.** La pression PP de présoufflage régnant dans le réservoir **20** de présoufflage est régulée, c'est-à-dire qu'elle est maintenue à une valeur sensiblement constante. Selon un exemple de réalisation, la pression PP de présoufflage est de 8 bars environ.

La machine **6** comprend par ailleurs un réservoir **24** dit de récupération, auquel la tuyère **15** de chaque poste **8** de formage est raccordée par un circuit **25** de récupération comprenant une tuyauterie et une électrovanne **26** de récupération commandée par un actionneur **27.** On note PR la pression, dite de récupération, régnant dans le réservoir **24** de récupération. La pression PR de récupération est supérieure (légèrement, de quelques dixièmes de bar à quelques bars seulement) à la pression de présoufflage. Selon un exemple de réalisation, la pression PR de récupération, qui comme nous allons le voir n'est pas régulée (et donc non constante), varie en moyenne aux environs de 9 bars.

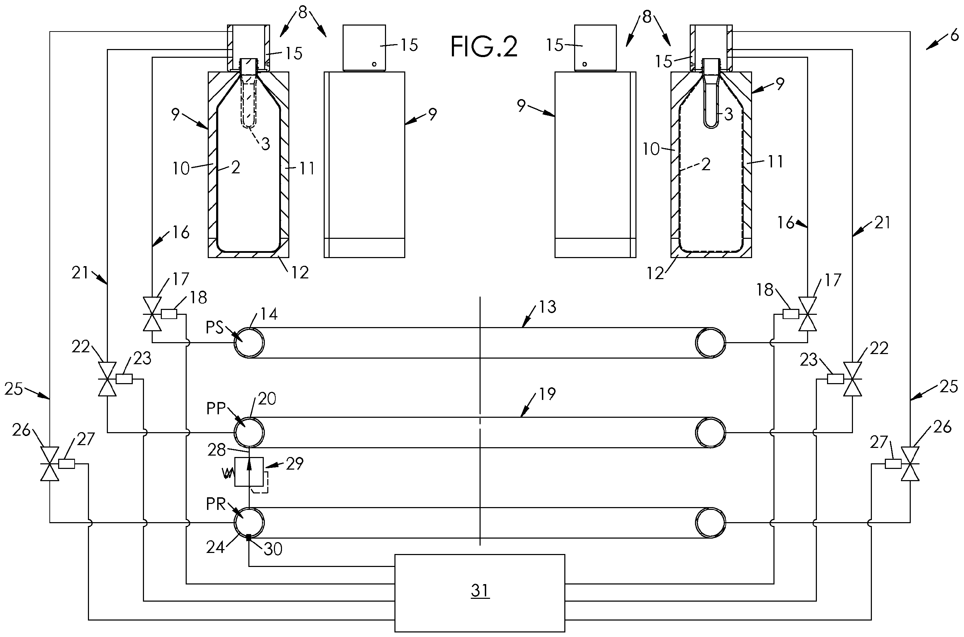

Comme on le voit sur la figure 2, le réservoir **24** de récupération est relié à la source **19** de fluide sous pression de présoufflage, et plus précisément au réservoir **20** de présoufflage, via un circuit **28** de raccordement équipé d'un régulateur **29** de pression.

Un capteur **30** de pression est monté dans le réservoir **24** de récupération. Des capteurs de pression peuvent également être montés dans le réservoir **14** de soufflage et dans le réservoir **20** de présoufflage. Un capteur de pression est également, de préférence, monté dans la tuyère **15** de chaque poste **8** de formage.

La machine **6** est commandée par une unité **31** centrale de contrôle, qui est reliée aux électrovannes **17**, **22**, **26** pour en commander l'ouverture ou la fermeture.

L'unité **31** centrale de contrôle est également reliée au capteur **30** de pression monté dans le réservoir **24** de récupération ainsi que, lorsqu'ils existent, aux capteurs de pression montés dans le réservoir **14** de soufflage et dans le réservoir **20** de présoufflage, ainsi qu'aux capteurs de pression montés dans chaque tuyère **15.**

De la sorte, l'unité **31** centrale de contrôle peut effectuer des mesures de pression au moins dans le réservoir **24** de récupération, et, le cas échéant, dans le réservoir **14** de soufflage et dans le réservoir **20** de présoufflage.

Comme nous le verrons ci-après, il n'est pas nécessairement avantageux, en raison de la mémoire informatique requise, d'effectuer une mesure systématique de la pression régnant à chaque instant dans chaque tuyère **15.**

En revanche, la pression PR dans le réservoir **24** de récupération est mesurée en permanence, c'est-à-dire à chaque instant selon une fréquence prédéterminée, définie par un programme implémenté dans l'unité **31** centrale de contrôle. Par exemple, la mesure de pression peut être effectuée à une fréquence de 200 Hz, c'est-à-dire qu'une mesure de pression est effectuée dans le réservoir **24** de récupération toutes les 5 ms.

Un cycle de formage, répété pour chaque poste **8** de formage, comprend au moins une étape d'injection du fluide sous pression dans l'ébauche **3**, suivie d'une étape de dépressurisation.

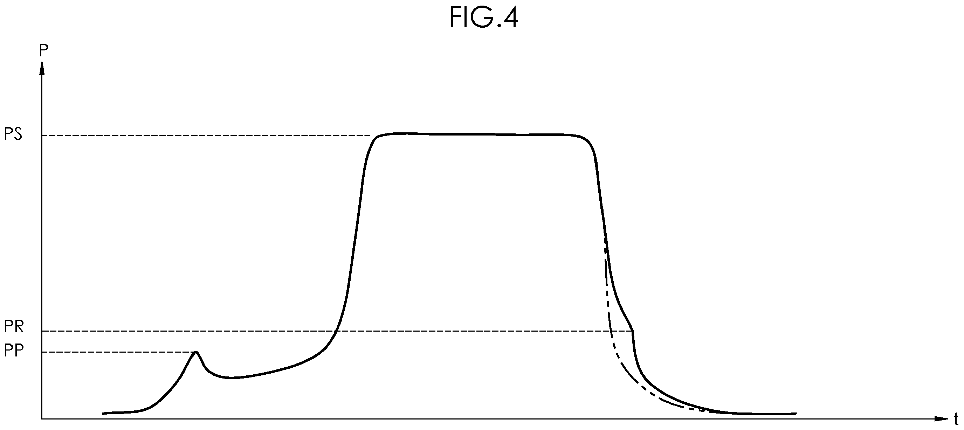

Plus précisément, un cycle de formage comprend :
- une première phase, dite de présoufflage, consistant à injecter dans l'ébauche **3** le fluide sous la pression PP de présoufflage, par mise de la tuyère **15** en communication avec la source **19** de fluide à la pression PP de présoufflage. A cet effet, l'unité **31** centrale de contrôle commande, via son actionneur **23**, l'ouverture de l'électrovanne **22** de présoufflage. On voit sur la figure 4 que la pression régnant dans le récipient **2** (mesurée par un capteur de pression monté par exemple dans la tuyère **15**) croît d'abord jusqu'à passer par un pic de pression (correspondant au seuil d'écoulement plastique de la matière) avant de subir une chute temporaire, suivie d'une nouvelle croissance sensiblement linéaire. A l'issue du présoufflage, le récipient **2** n'est pas complètement formé mais la matière a atteint les parois du moule **9** sans en épouser intimement les reliefs ;
- une deuxième phase, dite de soufflage, consistant à injecter dans le récipient **2** en cours de formage le fluide sous la pression PS de soufflage, par mise de la tuyère **15** en communication avec la source **13** de fluide à la pression PS de soufflage. A cet effet, l'unité **31** centrale de contrôle commande, via leurs actionneurs **18**, **23** respectifs, l'ouverture de l'électrovanne **17** de soufflage et la fermeture de l'électrovanne **22** de présoufflage. On voit sur la figure 4 que la pression régnant dans le récipient **2** croît d'abord brusquement avant de s'établir à un palier correspondant à la pression PS de soufflage. à l'issue du soufflage, le récipient **2** est complètement formé, la matière épousant intimement les reliefs de la paroi du moule **9** ;
- une troisième phase, dite de dépressurisation, qui comprend :
   - une étape dite de récupération consistant à dépressuriser le récipient **2** par mise de la tuyère **15** en communication avec le réservoir **24** de récupération ; à cet effet, l'unité **31** centrale de contrôle commande, via leurs actionneurs **18**, **27** respectifs, la fermeture de l'électrovanne **17** de soufflage et l'ouverture de l'électrovanne **26** de récupération ; on voit sur la figure 4 (tracé en trait plein) que la pression dans la tuyère **15** (c'est-à-dire dans le récipient **2** formé) chute d'abord brusquement, avant de suivre une amorce d'asymptote vers la pression PR de récupération ;
   - une étape de dégazage consistant à dépressuriser complètement le récipient **2**, en l'occurrence par mise de la tuyère **15** en communication avec l'air libre ; à cet effet, l'unité **31** centrale de contrôle commande, via son actionneur, la fermeture de l'électrovanne **26** de récupération et l'ouverture d'une électrovanne (non représentée) de mise à l'air libre.

Le fluide qui se déverse des postes **8** de formage dans le réservoir **24** de récupération est à une pression supérieure à la pression PP de présoufflage. L'unité **31** centrale de contrôle est par exemple programmée pour fermer l'électrovanne **26** de récupération à un instant prédéterminé du cycle de formage auquel il est présumé que la pression régnant dans le récipient **2** atteint une pression voisine de la pression moyenne de récupération. En variante, le capteur de pression équipant la tuyère **15** est utilisé pour détecter directement cet instant et provoquer la fermeture par l'unité **31** centrale de contrôle de l'électrovanne **26** de récupération.

Le fluide collecté lors de l'étape de récupération est réinjecté du réservoir **24** de récupération dans le réservoir **20** de présoufflage via le circuit **28** de raccordement, la pression étant régulée par le régulateur **29** pour être ramenée à la valeur de la pression PP de présoufflage.

Le cycle de formage est répété successivement dans chaque poste **8** de formage. A chaque instant, les postes **8** de formage sont dans des états différents. Chaque état est néanmoins atteint par les postes **8** de formage avec une périodicité T proportionnelle à la vitesse angulaire de rotation de la roue **7.** Dans le cas d'une machine **6** équipée de vingt quatre postes **8** de formage et tournant à une vitesse angulaire d'un demi-tour par seconde, un état donné est successivement atteint par les postes **8** de formage avec une périodicité T de 1/12 s.

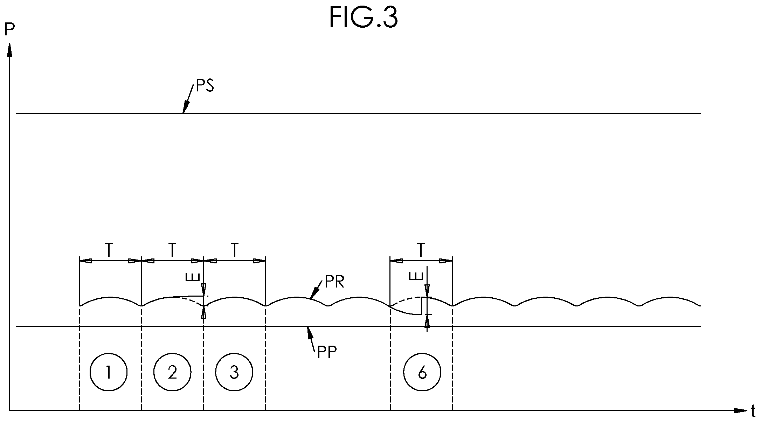

Le fluide du réservoir **24** de récupération est donc déversé successivement par les postes **8** de formage avec cette même périodicité T. C'est d'ailleurs avec cette même périodicité T qu'est prélevé le fluide du réservoir **14** de soufflage. Il en résulte que la pression PR de récupération régnant dans le réservoir **24** de récupération est affectée de variations périodiques qui, comme cela est illustré sur la figure 3, lui confèrent une allure périodique (par exemple grossièrement sinusoïdale) de période T. Le signal caractéristique des variations de la pression PR de récupération est construit par l'unité **31** centrale de contrôle à partir des données collectées par le capteur **30** de pression.

Le signal (ou la courbe) des variations de la pression PR de récupération comprend donc une succession de séquences similaires se répétant à intervalles sensiblement constants (de période T).

Comme on le voit sur la figure 3, chaque séquence, dite nominale (c'est-à-dire en fonctionnement normal) de période T comprend une phase de croissance (correspondant à l'ouverture de l'électrovanne **26** de récupération) à partir d'une valeur minimale jusqu'à une valeur maximale, suivie d'une phase de décroissance (correspondant à l'ouverture de l'électrovanne **22** de présoufflage, consécutive à la fermeture de l'électrovanne **26** de récupération).

Un traitement du signal permet, par échantillonnage, de déceler, dans le signal relatant les variations de la pression PR de récupération, les séquences de période T. A cet effet, l'unité **31** centrale de contrôle peut être programmée pour calculer la pente à la courbe (c'est-à-dire la dérivée de la fonction PR(t), où t représente le temps, en abscisse sur le diagramme de la figure 3) et en détecter l'annulation (correspondant à un pic ou à un creux), et vérifier que cette annulation se produit à intervalle sensiblement constant.

En identifiant chaque poste **8**, par exemple par numérotation (successive de 1 à 24 dans une machine **6** de formage équipée de vingt quatre postes **8** de formage), l'unité **31** centrale de contrôle peut donc, par simple comptage, affecter chaque séquence à un poste **8** de formage, et ce de manière bijective. Le comptage peut être réalisé grâce à un codeur fournissant, la position angulaire de la roue **7** et dont la valeur nulle correspond, après une initialisation, à un poste **8** donné, par exemple le poste **8** portant le numéro ①.

Toute anomalie affectant un poste **8** de formage (notamment le dysfonctionnement de l'électrovanne **24** de récupération) se répercute localement sur la courbe des variations de la pression PR de récupération, par une dérive dans la séquence correspondante, qui s'écarte de la séquence nominale (telle que décrite ci-dessus).

Pour détecter une dérive, l'unité **31** centrale de contrôle est programmée pour comparer à chaque instant la pression PR de récupération mesurée avec une valeur théorique prédéterminée correspondant à un déroulement normal du formage, pour détecter tout écart E critique.

Un écart E est dit critique lorsqu'il est supérieur à une valeur seuil prédéterminée. Des dérives momentanées non caractéristiques d'une anomalie affectant l'un des postes **8** de formage peuvent en effet se produire. Dans ce cas, les écarts entre la pression PR de récupération mesurée et la valeur théorique correspondante sont inférieurs au seuil et ne sont pas pris en compte.

Dès lors qu'un écart E critique est détecté, l'unité **31** centrale de contrôle génère une alerte. Cette alerte se présente sous forme d'un signal qui peut :
- être affiché directement sur une console pour être lue par un opérateur chargé de la maintenance de la machine **6**, ou
- être exploité par la machine **6** elle-même en vue d'opérer une modification de ses propres paramètres de fonctionnement (par exemple un réglage de débit au niveau de l'électrovanne **26** de récupération),
- ou encore provoquer l'arrêt automatique de la machine **6** en vue de permettre des opérations ultérieures de maintenance.

Nous avons vu que le signal relatant les variations de la pression PR de récupération peut être traité et échantillonné pour affecter chaque séquence à un poste **8** de formage. Aussi, lorsqu'un écart E critique est détecté dans une séquence (comme illustré sur la figure 3 où l'on a illustré deux écarts E détectés à des instants différents entre le signal mesuré - en trait plein - et le signal nominal - en pointillés), l'unité **31** centrale de contrôle peut déterminer le poste **8** de formage correspondant à la séquence dans laquelle l'écart E critique a été détecté.

Dans ce cas, l'alerte peut comprendre la désignation (par exemple le numéro) du poste **8** de formage correspondant à cette séquence. Sur la figure 3, on a représenté dans des bulles les numéros des postes **8** de formage identifiés comme correspondant aux séquences décelées dans le signal. On voit que le poste **8** de formage correspondant à une première séquence dans laquelle un écart E critique a été détecté porte le numéro ②, et le poste **8** de formage correspondant à une deuxième séquence dans laquelle un écart E critique a été détecté porte le numéro ⑥.

Dans le premier cas (poste de formage numéro ②), le signal mesuré indique des valeurs de pression supérieures à celles du signal nominal, témoignant d'un défaut affectant les fonctions d'injection (présoufflage, soufflage).

A contrario, dans le deuxième cas (poste de formage numéro ⑥), le signal mesuré indique des valeurs de pression inférieures à celles du signal nominal, témoignant d'un défaut affectant la fonction de récupération.

Lorsque le signal d'alerte est affiché sur la console de de commande la machine, le numéro du poste 8 décrété défaillant (en l'espèce le numéro ⑥) peut être directement affiché pour avertir l'opérateur que l'anomalie détectée affecte ce poste **8.**

L'opérateur peut alors prendre les mesures qu'il juge appropriées pour identifier l'anomalie et opérer l'intervention nécessaire à la remise en état du poste **8** défaillant.

Pour ce faire, l'opérateur peut initier une phase de mesure des variations de la pression, au cours d'un cycle de formage, du fluide dans la tuyère **15** du poste **8** de formage présumé défaillant (désigné par l'alerte). En variante, cette phase de mesure peut être initiée par l'unité **31** centrale de contrôle sans intervention de l'opérateur.

Dans les deux cas, un signal caractéristique des variations de pression du fluide dans la tuyère **15** du poste **8** de formage désigné par l'alerte est construit par l'unité **31** centrale de contrôle à partir des mesures de pression effectuées par le capteur **30** de pression, puis ce signal est comparé avec un signal nominal prédéterminé, pour détecter tout écart supérieur à une valeur seuil prédéterminée (sous cette valeur seuil, un écart n'est pas pris en compte, ce qui permet de discriminer les écarts dus à une anomalie et ceux dus aux variations insensibles qui affectent le cycle de formage d'un récipient **2** à l'autre).

On a illustré sur la figure 4, en trait mixte, le signal de pression relevé sur le poste **8** présumé défaillant, et en trait plein le signal nominal. Voyant qu'à l'issue du soufflage la pression chute directement vers la valeur (relative) nulle sans passer par une amorce d'asymptote, l'opérateur est en mesure de formuler l'hypothèse qu'une défaillance affecte l'électrovanne **26** de récupération.

L'opérateur peut alors directement intervenir sur le poste **8** de formage, en l'espèce pour réparer ou remplacer l'électrovanne **26** de récupération.

On voit que l'analyse de la seule courbe des variations de la pression PR de récupération permet de détecter une anomalie sans qu'il soit nécessaire de mesurer en permanence la pression régnant dans chaque tuyère **15.**

Il en résulte, par comparaison avec une mesure systématique de la pression dans chaque tuyère **15** et l'analyse de chaque signal correspondant, une économie importante dans les moyens et le temps de calcul nécessaire à l'identification de l'anomalie.

On voit aussi qu'outre qu'il permet de détecter une anomalie, le procédé décrit ci-dessus permet également d'identifier la fonction (injection ou récupération) qui dysfonctionne.

## Revendications

1. Procédé de formage de récipients (**2**) à partir d'ébauches (**3**) en matière plastique au sein d'une machine (**6**) de formage, un cycle de formage comprenant au moins une étape d'injection d'un fluide sous pression dans l'ébauche (**3**), suivie d'une étape de dépressurisation accompagnée d'une opération de récupération partielle du fluide sous pression au cours de la dépressurisation, la machine (**6**) comprenant une pluralité de postes (**8**) de formage chacun équipé d'un moule (**9**) et d'une tuyère (**15**) raccordée à une source (**13**) de fluide sous pression et par laquelle le fluide est injecté dans une ébauche (**3**) placée dans le moule (**9**), la machine (**6**) étant équipée d'un réservoir (**24**) pour la récupération de fluide sous pression au cours de l'opération de récupération, ce procédé comprenant les opérations consistant à :
- mesurer la pression (PR) du fluide dans le réservoir (**24**) ;
- comparer cette pression (PR) avec une pression théorique prédéterminée pour détecter tout écart (E), dit critique, supérieur à une valeur seuil prédéterminée ;
- dès lors qu'un écart (E) critique est détecté, générer un signal, ledit réservoir (24) pour la récupération étant raccordé à l'ensemble des tuyères (15), la pression (PR) du fluide dans le réservoir (24) étant
mesurée en permanence et ledit signal généré étant
une alerte de détection d'une anomalie au cours du formage.

2. Procédé selon la revendication 1, **caractérisé en ce qu'**il comprend une opération de construction d'un signal caractéristique des variations de la pression (PR) du fluide dans le réservoir (**24**).

3. Procédé selon la revendication 2, **caractérisé en ce qu'**il comprend une opération d'échantillonnage du signal pour y déceler des séquences similaires se répétant à intervalles (T) sensiblement constants.

4. Procédé selon la revendication 3, **caractérisé en ce qu'**il comprend une opération d'affectation de chaque séquence à un poste de formage.

5. Procédé selon la revendication 4, **caractérisé en ce qu'**il comprend, lorsqu'un écart critique (E) est détecté dans une séquence, une opération de détermination du poste (**8**) de formage correspondant à celle-ci.

6. Procédé selon la revendication 5, **caractérisé en ce que** l'alerte comprend la désignation du poste (**8**) de formage correspondant à la séquence dans laquelle l'écart (E) critique a été détecté.

7. Procédé selon la revendication 6, **caractérisé en ce que**, chaque poste (**8**) étant équipé d'un capteur de pression propre à mesurer la pression de fluide dans la tuyère (**15**), il comprend une phase de mesure des variations de la pression, au cours d'un cycle de formage, du fluide dans la tuyère (**15**) du poste de formage désigné par l'alerte.

8. Procédé selon la revendication 7, **caractérisé en ce qu'**il comprend une opération de construction d'un signal caractéristique des variations de la pression du fluide dans la tuyère (**15**).

9. Procédé selon la revendication 8, **caractérisé en ce qu'**il comprend une opération de comparaison du signal caractéristique des variations de la pression du fluide dans la tuyère (15) avec un signal prédéterminé pour détecter tout écart supérieur à une valeur seuil prédéterminée.

## Patentansprüche

1. Verfahren zum Formen von Behältern (2) ausgehend von Rohlingen (3) aus Kunststoff in einer Formgebungsmaschine (6), wobei ein Formgebungszyklus mindestens einen Schritt des Einspritzens eines Druckfluids in den Rohling (3), gefolgt von einem Druckentlastungsschritt begleitet von einem Vorgang der teilweisen Wiedergewinnung des Druckfluids während der Druckentlastung enthält, wobei die Maschine (6) eine Vielzahl von Formgebungsstationen (8) enthält, die je mit einer Form (9) und einer Düse (15) ausgestattet sind, die an eine Druckfluidquelle (13) angeschlossen ist und durch die das Fluid in einen in der Form (9) angeordneten Rohling (3) gespritzt wird, wobei die Maschine (6) mit einem Auffangbehälter (24) für die Wiedergewinnung von Druckfluid während des Wiedergewinnungsvorgangs ausgerüstet ist, wobei dieses Verfahren die Vorgänge enthält, die darin bestehen:
- den Druck (PR) des Fluids im Auffangbehälter (24) zu messen;
- diesen Druck (PR) mit einem vorbestimmten theoretischen Druck zu vergleichen, um jede so genannte kritische Abweichung (E) zu erfassen, die höher ist als ein vorbestimmter Schwellwert;
- sobald eine kritische Abweichung (E) erfasst wird, ein Signal zu erzeugen, wobei der Auffangbehälter (24) für die Wiedergewinnung an die Einheit der Düsen (15) angeschlossen ist, wobei der Druck (PR) des Fluids im Auffangbehälter (24) durchgehend gemessen wird und das erzeugte Signal ein Alarm der Erfassung einer Anomalie während der Formgebung ist.

2. Verfahren nach Anspruch 1, **dadurch gekennzeichnet, dass** es einen Vorgang des Aufbaus eines für die Änderungen des Drucks (PR) des Fluids im Auffangbehälter (24) charakteristischen Signals enthält.

3. Verfahren nach Anspruch 2, **dadurch gekennzeichnet, dass** es einen Abtastvorgang des Signals enthält, um dort ähnliche Folgen festzustellen, die sich in im Wesentlichen konstanten Zeitabständen (T) wiederholen.

4. Verfahren nach Anspruch 3, **dadurch gekennzeichnet, dass** es einen Vorgang der Zuweisung jeder Folge zu einer Formgebungsstation enthält.

5. Verfahren nach Anspruch 4, **dadurch gekennzeichnet, dass** es, wenn eine kritische Abweichung (E) in einer Folge erfasst wird, einen Vorgang der Bestimmung der dieser entsprechenden Formgebungsstation (8) enthält.

6. Verfahren nach Anspruch 5, **dadurch gekennzeichnet, dass** der Alarm die Bezeichnung der Formgebungsstation (8) enthält, die der Folge entspricht, in der die kritische Abweichung (E) erfasst wurde.

7. Verfahren nach Anspruch 6, **dadurch gekennzeichnet, dass** es, da jede Station (8) mit einem Drucksensor ausgestattet ist, der den Fluiddruck in der Düse (15) messen kann, eine Phase des Messens der Änderungen des Drucks, während eines Formgebungszyklus, des Fluids in der Düse (15) der vom Alarm bezeichneten Formgebungsstation enthält.

8. Verfahren nach Anspruch 7, **dadurch gekennzeichnet, dass** es einen Vorgang des Aufbaus eines für die Änderungen des Drucks des Fluids in der Düse (15) charakteristischen Signals enthält.

9. Verfahren nach Anspruch 8, **dadurch gekennzeichnet, dass** es einen Vorgang des Vergleichs des für die Änderungen des Drucks des Fluids in der Düse (15) charakteristischen Signals mit einem vorbestimmten Signal enthält, um jede Abweichung oberhalb eines vorbestimmten Schwellwerts zu erfassen.

## Claims

1. Method for forming containers (2) from blanks (3) made of plastics material in a forming machine (6), a forming cycle comprising at least one step of injecting a pressurized fluid into the blank (3), followed by a step of depressurization, accompanied by an operation for recovering some of the pressurized fluid during the depressurization, the machine (6) comprising a plurality of forming stations (8) which are each equipped with a mould (9) and a nozzle (15) which is connected to a source (13) of pressurized fluid, and by means of which the fluid is injected into a blank (3) placed in the mould (9), the machine (6) being equipped with a reservoir (24) for recovering pressurized fluid during the recovery operation, said method comprising operations consisting in:
- measuring the pressure (PR) of the fluid in the reservoir (24);
- comparing said pressure (PR) with a predetermined theoretical pressure to detect any deviation (E) which is greater than a predetermined threshold value, referred to as a critical deviation;
- once a critical deviation (E) is detected, generating a signal,
said reservoir (24) for recovery being connected to all the nozzles (15), the pressure (PR) of the fluid in the reservoir (24) being measured continuously, and said generated signal being an alert of an anomaly being detected during the forming.

2. Method according to Claim 1, **characterized in that** it comprises an operation of constructing a signal which is characteristic of the variations in the pressure (PR) of the fluid in the reservoir (24).

3. Method according to Claim 2, **characterized in that** it comprises an operation of sampling the signal to detect similar sequences therein which repeat at substantially constant intervals (T).

4. Method according to Claim 3, **characterized in that** it comprises an operation of assigning each sequence to a forming station.

5. Method according to Claim 4, **characterized in that**, when a critical deviation (E) is detected in a sequence, said method comprises an operation of determining the forming station (8) corresponding thereto.

6. Method according to Claim 5, **characterized in that** the alert comprises the identification of the forming station (8) corresponding to the sequence in which the critical deviation (E) was detected.

7. Method according to Claim 6, **characterized in that**, each station (8) being equipped with a pressure sensor suitable for measuring the pressure of the fluid in the nozzle (15), said method comprises a phase of measuring variations in the pressure, during a forming cycle, of the fluid in the nozzle (15) of the forming station identified by the alert.

8. Method according to Claim 7, **characterized in that** it comprises an operation of constructing a signal which is characteristic of the variations in the pressure of the fluid in the nozzle (15).

9. Method according to Claim 8, **characterized in that** it comprises an operation of comparing the signal which is characteristic of the variations in the pressure of the fluid in the nozzle (15) with a predetermined signal to detect any deviation which is greater than a predetermined threshold value.
